# EUROPEAN PATENT APPLICATION

(11) **EP 0 886 040 A2**
(43) Date of publication of application: **23.12.1998**
(21) Application number: 98304679.8
(22) Date of filing: 12.06.1998
(51) Int. Cl.: F01N 3/08, B01D 53/34

(54) **System for exhaust gas purification**

(30) Priority: 16.06.1997 JP 158946/97
(71) Applicant: NGK INSULATORS, LTD., Nagoya City Aichi Pref. (JP)
(72) Inventor: Noda, Naomi, Ichinomiya-city, Aichi-pref., 491-0931 (JP); Shibagaki, Yukinari, Konan-city, Aichi-pref., 483-8277 (JP); Mizuno, Hiroshige, Tajimi-city, Gifu-pref., 507-0804 (JP)
(74) Representative: Paget, Hugh Charles Edward

(57) **Abstract**

A system for exhaust gas purification disposed in the exhaust pipe of an internal combustion engine, includes: an adsorbent formed by loading, on a first honeycomb carrier, an adsorbent layer containing an adsorbent component having a hydrocarbon adsorptivity, and a honeycomb heater formed by fixing, to a second honeycomb carrier made of an electrically heatable material and having a large number of passages, electrodes for electrification of the carrier, the honeycomb heater being provided downstream of the adsorbent in the flow direction of the exhaust gas emitted from the engine. In the system, the adsorbent and the honeycomb heater each have a catalyst component loaded thereon, the total volume of the adsorbent and the honeycomb heater is 0.8 liter or larger, and the volume of the adsorbent is 0.4 liter or larger. This exhaust gas purification system can very effectively adsorb the unburnt HC emitted from an internal combustion engine during the cold start and can purify each of the HC, CO and NOx emitted from the engine, to a very low level.

## Description

### Background of the Invention

### (1) Field of the Invention

The present invention relates to a system for exhaust gas purification, capable of effectively purifying the harmful substances present in the exhaust gas emitted from an internal combustion engine, particularly the hydrocarbons discharged from the engine in a large amount during the cold start.

### (2) Description of Related Art

Active researches and developments have heretofore been made on systems for exhaust gas purification, used for purifying the harmful substances present in exhaust gas from automobile engine, such as nitrogen oxides (NOₓ), carbon monoxide (CO), hydrocarbons (HC) and the like. In recent years, as the regulation on exhaust gas has become stricter, the purification of HC during engine start (cold start) has become an important technical task.

The reason is as follows. During the cold start of engine when the temperature of exhaust gas from engine is low, the catalyst disposed in exhaust pipe of engine does not reach its light-off temperature and has a low purification ability. Moreover, during this period, as compared with the period of continuous operation of engine, a large amount of HC is discharged from the engine. As a result, the HC discharged during the cold start occupies a large proportion of the total harmful substances discharged from the engine and needs to be removed.

In order to achieve the above-mentioned technical task (the purification of HC during engine start), there was proposed, in Japanese Patent Application Kokai (Laid-Open) No. 31359/1993, a system for exhaust gas purification disposed in the exhaust pipe of an internal combustion engine, which comprises: a main monolithic catalyst, an adsorbent containing an adsorbent component (e.g. a zeolite) having a HC adsorptivity, and a honeycomb heater formed by fixing, to a honeycomb structure having a large number of passages, at least two electrodes for electrification of the honeycomb structure. In this exhaust gas purification system, the order of the positions of the adsorbent, the honeycomb heater and the main monolithic catalyst is not specified; however, a case of providing the honeycomb heater downstream of the adsorbent is disclosed.

There was also proposed, in Japanese Patent Application Kokai (Laid-Open) No. 7-232084, a system for exhaust gas purification disposed in the exhaust pipe of an internal combustion engine, which comprises: an adsorbent-catalyst containing an adsorbent layer (e.g. a zeolite) having a HC adsorptivity and a catalyst component, a catalyst formed by loading a catalyst layer on a honeycomb structure, provided downstream of the adsorbent-catalyst in the flow direction of the exhaust gas emitted from the engine, and an electrical heater of honeycomb type provided between the adsorbent-catalyst and the catalyst. In the latter literature, an example is disclosed in which a catalyst component is loaded on the honeycomb type electrical heater.

With the above exhaust gas purification systems, the HC emitted during the cold start of engine is adsorbed by the adsorbent; when the adsorbent is heated and the adsorbed HC is desorbed from the adsorbent, the main monolithic catalyst is heated by the honeycomb heater provided downstream of the adsorbent and initiates light-off; thereby, the harmful substances (e.g. HC, CO and NOx) present in the exhaust gas can be purified favorably.

As to the above exhaust gas purification systems, however, no thorough investigation is made on the total catalyst volume in system required for effective decrease of the harmful substances in exhaust gas after the warm-up of the system; therefore, there has been a fear that the catalyst volume is insufficient and that the removal of the harmful substances in exhaust gas are not removed sufficiently.

### Summary of the Invention

The present invention has been completed in view of the above situation and is intended to provide a system for exhaust gas purification disposed in the exhaust pipe of an internal combustion engine, comprising an adsorbent and a honeycomb heater, wherein the total volume of the catalyst(s) loaded on the adsorbent and the honeycomb heater is specified in an appropriate range and thereby not only HC but also CO and NOx all present in the exhaust gas can be purified each to a very low level.

According to the present invention, there is provided a system for exhaust gas purification disposed in the exhaust pipe of an internal combustion engine, which comprises:
an adsorbent formed by loading, on a first honeycomb carrier, an adsorbent layer containing an adsorbent component having a hydrocarbon adsorptivity, and
a honeycomb heater formed by fixing, to a second honeycomb carrier made of an electrically heatable material and having a large number of passages, electrodes for electrification of the carrier, the honeycomb heater being provided downstream of the adsorbent in the flow direction of the exhaust gas emitted from the engine,
in which system the adsorbent and the honeycomb heater each have a catalyst component loaded thereon, the total volume of the adsorbent and the honeycomb heater is 0.8 liter or larger, and the volume of the adsorbent is 0.4 liter or larger.

As mentioned above, the exhaust gas purification system of the present invention comprises (1) an adsorbent formed by loading an adsorbent layer on a first honeycomb carrier and (2) an electrical heater (a honeycomb heater) provided downstream of the adsorbent, wherein the volume of the adsorbent and the total volume of the adsorbent and the honeycomb heater are specified. By specifying the volume of the adsorbent and the total volume of the adsorbent and the honeycomb heater, the total catalyst volume of the system, i.e. the total volume of the honeycomb carriers on which the catalyst component(s) is (are) loaded, is specified and moreover the adsorbent can have a volume of minimum requirement or more; as a result, the unburnt HC generated during the cold start of engine can be adsorbed very effectively and the HC, CO and NOx present in exhaust gas can be purified each to a very low level.

Herein, the "volume" of the adsorbent or the honeycomb heater refers to the volume defined by the contour of the honeycomb carrier used in the adsorbent or the honeycomb heater and is a volume including even the passages formed in the honeycomb carrier.

### Brief Description of the Drawings

Fig. 1 is a drawing of an example of the honeycomb heater used in the present invention.

Fig. 2 is a schematic drawing of a case wherein honeycomb heaters are arranged in a plurality of stages.

Fig. 3 is a schematic drawing of other case wherein honeycomb heaters are arranged in a plurality of stages.

Fig. 4 is a schematic drawing of the exhaust gas purification system used in Example 1 of the present invention.

Fig. 5 is a schematic drawing of the exhaust gas purification system used in Example 2 of the present invention.

Fig. 6 is a schematic drawing of the exhaust gas purification system used in Example 3 of the present invention.

Fig. 7 is a schematic drawing of the exhaust gas purification system used in Example 4 of the present invention.

Fig. 8 is a schematic drawing of the exhaust gas purification system used in Example 5 of the present invention.

Fig. 9 is a schematic drawing of the exhaust gas purification system used in Comparative Example 1 of the present invention.

Fig. 10 is a schematic drawing of the exhaust gas purification system used in Comparative Example 2 of the present invention.

Fig. 11 is a schematic drawing of the exhaust gas purification system used in Comparative Example 3 of the present invention.

Fig. 12 is a schematic drawing of the exhaust gas purification system used in Comparative Example 4 of the present invention.

Fig. 13 is a schematic drawing of the exhaust gas purification system used in Comparative Example 5 of the present invention.

### Detailed Description of the Preferred Embodiment

The present invention is hereinafter described in detail. In the exhaust gas purification system of the present invention, the adsorbent used therein is formed by loading, on a first honeycomb carrier, an adsorbent layer containing an adsorbent component having a hydrocarbon adsorptivity. The honeycomb carrier has a large number of passages and specifically is a structure having a large number of passages which are substantially parallel to the direction of the gas flowing therethrough and which are each surrounded by a partition wall(s).

Desirably, the adsorbent has a volume of 0.4 liter or larger, preferably 0.7 liter or larger, more preferably 1.0 liter or larger so that the desorption of HC therefrom takes place as late as possible and the adsorbent can have a high HC adsorptivity to achieve very effective adsorption of unburnt HC. There is no theoretical upper limit as to the volume of the adsorbent, but the upper limit is preferably 3.0 liters or smaller in view of the mountability of the present system on the exhaust pipe of automobile or the like.

As the material for the first honeycomb carrier, there are suitably used ceramic materials made of cordierite, mullite or the like; foil-shaped metallic materials made of heat-resistant stainless steel (e.g. Fe-Cr-Al alloy); and metallic materials molded into a honeycomb structure by powder metallurgy. The first honeycomb carrier preferably has a cell density of 6 to 1,500 cells/in.² (cpi²) (0.9 to 233 cells/cm²) and a partition wall thickness of 50 to 2,000 µm (about 2 to 79 mil).

The first honeycomb carrier has a length in axial direction (flow direction of exhaust gas), of preferably 60 to 300 mm, more preferably 100 to 250 mm. When the length is smaller than 60 mm, the resulting adsorbent has a small volume, which hastens the temperature increase and consequently the desorption of HC therefrom. When the length is larger than 300 mm, the resulting exhaust gas purification system has problems in mountability and pressure loss.

The adsorbent layer loaded on the first honeycomb carrier is preferably made mainly of a zeolite. The first honeycomb layer per se may be made of a zeolite . The zeolite may be any of a natural product and a synthetic product and has no restriction as to the kind. The zeolite preferably has a Si/Al ratio of 40 or more in view of the heat resistance, durability and hydrophobicity. The zeolite more preferably has a Si/Al ratio of 80 or more in view of hydrophobicity. Preferable specific examples of the zeolite are ZSM-5, USY, β-zeolite, silicalite and a metallosilicate.

A catalyst component is loaded on the adsorbent. The loading is preferably conducted by ion exchange so that the zeolite (which is a main component of the adsorbent layer) can contain at least one kind of noble metal selected from Pt, pd and Rh, in view of the thermal stability of the resulting adsorbent. When the zeolite is loaded on the first honeycomb carrier, the zeolite may contain, as necessary, 5 to 20% by weight of an inorganic binder (e.g. Al₂O₃ or SiO₂), whereby the zeolite can be loaded on the carrier strongly without reducing the HC adsorptivity.

When at least one kind of noble metal has been loaded on the zeolite as above, the noble metal has a catalytic activity and a regeneratability of zeolite; however, the noble metal in zeolite tends to cause cohesion and is insufficient in catalyst durability. Hence, in producing an adsorbent of the present system, it is preferred to (1) allow an adsorbent layer consisting of a zeolite to contain a catalyst component obtained by loading a noble metal on a heat-resistant oxide, or (2) coat, on said adsorbent layer, a catalyst layer containing said catalyst component. Such an adsorbent contains a durable catalyst component and can show a satisfactory purifiability even during the steady-state operation after cold start. Since the catalyst component has even an effect of reducing the coking on zeolite, it is not necessary to separately add, to the zeolite, a noble metal for coking control.

It is preferred to allow the zeolite as adsorbent layer to further contain at least one kind of ion selected from the ions of group IB elements (Cu, Ag and Au) of periodic table because the HC adsorptivity of the zeolite can be increased thereby. A low content of the ion in the zeolite results in a low effect on increase of the HC adsorptivity of the zeolite; therefore, the ion content in the zeolite is preferably at least 20%, more preferably at least 40% based on the Al atoms in the zeolite. The ion may be allowed to be present in the zeolite in any combination with the above-mentioned noble metal(s).

A preferred example of the adsorbent in which a catalyst layer is formed on an adsorbent layer, includes a multilayer type adsorbent obtained by (1) forming, on a first honeycomb carrier, a first layer (a lower layer) made of a H type zeolite and/or a high-silica zeolite (e.g. noble metal-loaded (by ion exchange) ZSM-5, USY or β-zeolite) and then (2) forming thereon a second layer (a surface layer) made of a noble metal-loaded Al₂O₃-CeO₂ compound oxide or a noble metal-loaded mixture of Al₂O₃ and CeO₂. In such a multilayer type adsorbent, the Al₂O₃ (which is a main component of the second layer) acts as a predryer capable of selectively adsorbing the H₂O contained in the exhaust gas emitted during the cold start of engine and thereby enhances the HC adsorptivity possessed by the first layer. In addition, with the temperature increase of exhaust gas, the second layer (surface layer) containing the catalyst component is heated first and, when the HC adsorbed by the zeolite component of the first layer (lower layer) starts desorption, the catalyst component of the second layer acts favorably. Introduction of secondary air (containing oxygen) upstream of the adsorbent at the start of HC desorption can enhance the catalytic activity of the second layer remarkably.

A relatively good effect is obtained even when a noble metal-containing catalyst component and a zeolite component are loaded on a first honeycomb carrier in a mixed state and not in layers. As to the weight ratio of the zeolite component and the catalyst component loaded on the first honeycomb carrier, a ratio at which the amount of the zeolite component is more than that of the catalyst component, specifically a ratio of 50 to 85 : 15 to 50 is preferred. The amount of loading on honeycomb carrier is preferably 0.05 to 0.40 g/cc (the zeolite component) and 0.02 to 0.30 g/cc (the catalyst component).

It is preferred to (1) allow the adsorbent to have a portion of low pressure loss by changing the length or porosity of part of the adsorbent or (2) form, in the adsorbent, a blowing-through hole having a diameter larger than those of the passages (cells) of the first honeycomb carrier, to allow part of the exhaust gas to blow through the hole, because (1) or (2) accelerates the warm-up of the honeycomb heater provided downstream of the adsorbent and enhances the efficiency of purification of desorbed HC. The diameter of the blowing-through hole is preferably 50 mm or less in view of the strength of carrier; the diameter is more preferably 40 mm or less in order to prevent the reduction in amount of HC adsorption, caused by blowing-through of excessive amount of exhaust gas. Conversely, when the diameter of the blowing-through hole is too small, the warm-up of the honeycomb heater provided downstream of the adsorbent is insufficient. Therefore, the diameter is preferably 10 mm or more.

In the present invention, the adsorbent and the honeycomb heater each have a catalyst component loaded thereon, as mentioned previously. This catalyst component preferably contains at least one noble metal selected from Pt, Pd and Rh so that the harmful substances such as HC, CO, NOx and the like, emitted from an internal combustion engine can be removed advantageously. Of these noble metals, Pd is particularly preferred in view of the low-temperature light-off property, and the amount of Pd loaded is preferably 5 to 300 g/ft³ and, in view of the dispersibility, more preferably 40 to 200 g/ft³.

These noble metals are used by being loaded on a heat-resistant oxide such as Al₂O₃, SiO₂, TiO₂, ZrO₂ or the like, or on a compound oxide thereof.

Next, description is made on the honeycomb heater used in the present invention.

The honeycomb heater is formed by fixing, to a second honeycomb carrier made of an electrically heatable material and having a large number of passages, electrodes for electrification of the honeycomb carrier.

The honeycomb heater has a catalyst component loaded thereon, as mentioned previously. Owing to the heat of the reaction caused by the catalyst, the heater can be heated by a smaller electric power.

The honeycomb heater may consist of one stage or two or more stages.

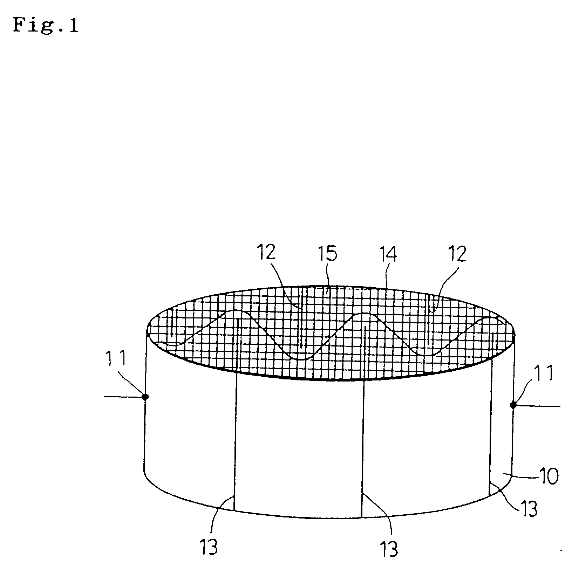

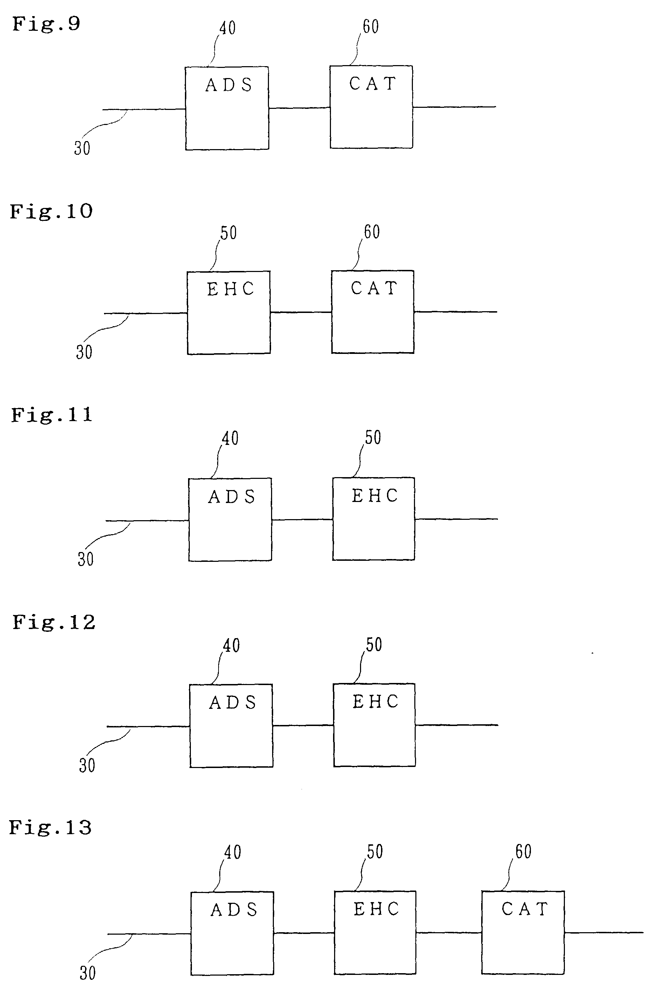

When the honeycomb heater consists of one stage, there is used, for example, a honeycomb carrier 16 shown in Fig. 1, having a large number of passages 15 which are surrounded by partition walls 14 and which are substantially parallel to the direction of gas flow. In Fig. 1, 10 is an outer wall, and two electrodes 11 are fixed to the outer wall 10. Further, a plurality (six in the case of Fig. 1) of slits 12 are formed in the axial direction of the passages 15, and a heat resistant inorganic adhesive is filled in the external portion (outer wall portion) 13 of each slit 12 to secure insulation.

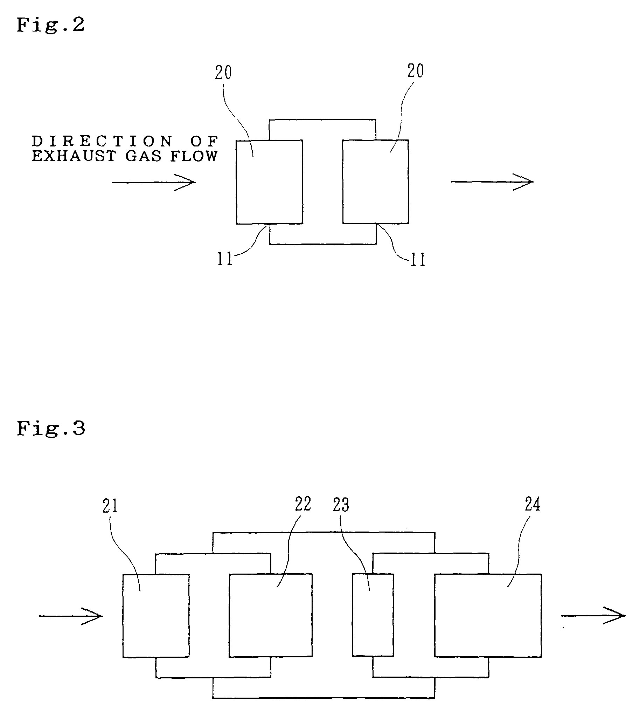

When the honeycomb heater consists of two or more stages, various arrangements such as the followings are possible.
(1) Honeycomb heaters 20 of the same shape are arranged in two or more stages, as shown in Fig. 2.
(2) Honeycomb heaters 21, 22, 23 and 24 of different volumes are arranged in a plurality of stages and they are electrically connected in series and/or in parallel, as shown in Fig. 3.
(3) Two or more honeycomb heaters are arranged in the flow direction of exhaust gas; and the resistance and/or heat capacity of the most upstream honeycomb heater is controlled so that the to-be-applied electric power and heat capacity of the most upstream honeycomb heater becomes larger than those of the downstream honeycomb heater(s) adjacent thereto, as described in U.S. Patent 5,465,573.
(4) Two or more honeycomb heaters are arranged in the flow direction of exhaust gas; and the light-off temperature of the most upstream honeycomb heater is controlled so as to become lower than that (those) of the downstream honeycomb heater(s) adjacent thereto, as described in U.S. Patent 5,465,573.

As to the material constituting the second honeycomb carrier, there is no restriction as long as the material is an electrically heatable material, and the material may be a metallic material or a ceramic material with a metallic material being preferred for its high mechanical strength. The metallic material includes, for example, stainless steel and materials having such compositions as Fe-Cr-Al, Fe-Cr, Fe-Al, Fe-Ni, W-Co, Ni-Cr and the like. Of these, Fe-Cr-Al, Fe-Cr and Fe-Al are preferred because of the heat resistance, oxidation resistance, corrosion resistance and cost.

The second honeycomb carrier used in the present invention is produced preferably by molding powder materials into a honeycomb shape and sintering it. In this case, powder metallurgy and extrusion molding are preferably used because it provides a simple process and a low cost.

The honeycomb heater used in the present invention is preferably a honeycomb heater comprising: a second honeycomb carrier made of a metal, and a heat-resistant metal oxide (e.g. Al₂O₃ or Cr₂O₃) loaded on the partition walls and pores of the carrier, because such a honeycomb heater has higher heat resistance, oxidation resistance and corrosion resistance. When the second honeycomb carrier is made of a metal, the carrier may be molded into a foil shape.

The second honeycomb carrier may be porous or non-porous. When a catalyst is loaded on the second honeycomb carrier, the second honeycomb carrier is preferably a porous honeycomb carrier because it has high adhesivity to the catalyst layer and there occurs substantially no peeling of catalyst caused by the difference in thermal expansion between the second honeycomb carrier and the catalyst. Even when the second honeycomb carrier is a non-porous honeycomb carrier, if the honeycomb carrier has a resistance-adjusting means such as slits or the like, the honeycomb carrier has smaller thermal stress and is unlikely to generate cracks, etc.

In the second honeycomb carrier, it is preferred to form a resistance-adjusting means selected from various types, between the electrodes.

Preferable examples of the resistance-adjusting means formed in the second honeycomb carrier are as follows.
(1) Formation of slits in various directions, positions and lengths in the honeycomb carrier.
(2) Change of the length of part of the partition walls of the honeycomb carrier, in the axial direction of passages.
(3) Change of the thickness of part of the partition walls of the honeycomb carrier, or change of the cell density of part of the passages of the honeycomb carrier.
(4) Formation of slits in part of the ribs of the honeycomb carrier.

The second honeycomb carrier is fitted with electrodes ordinarily at the outside or inside of the outer wall by brazing, welding or the like, whereby the honeycomb heater of the present invention is produced.

Herein, the "electrodes" refer to any terminals used for electrifying the honeycomb heater, and include even a direct contact between the outer wall of the heater and a casing used for accommodating the heater and terminals such as earth and the like.

Preferably, the second honeycomb carrier is produced so as to have a total resistance of 0.001 to 0.5 Ω.

As to the shape of the second honeycomb carrier, there is no particular restriction, similarly to the shape of the first honeycomb carrier. However, it is preferred that the second honeycomb carrier is produced so as to have a cell density of, for example, 6 to 1,500 cells/in.² (0.9 to 233 cells/cm²) and a partition wall thickness of 2 to 10 mil.

The first and second honeycomb carriers may be porous or non-porous and have no restriction as to the porosity. However, the porosity is preferably 0 to 50%, more preferably smaller than 25% in view of the strength, oxidation resistance and corrosion resistance of the honeycomb carriers. When a catalyst is loaded thereon, the honeycomb carriers preferably have a porosity of 5% or more in view of the adhesivity to the catalyst.

In the present invention, the "honeycomb carrier" refers to a one-piece structure having a large number of passages each surrounded by partition walls, and the sectional shape (cell shape) of each passage can be any desired shape selected from, for example, circle, polygon, corrugation, etc.

Next, the timing of electrifying the honeycomb heater can be selected from (1) preheating in which the heating of the honeycomb heater is started prior to the start of engine, (2) postheating in which the heating of the honeycomb heater is started simultaneously with the start of engine, (3) a method in which the timing of electrification is determined so as to match the HC desorption form the adsorbent provided upstream of the honeycomb heater, and (4) other method. The timing can be determined appropriately in consideration of the volume of the upstream adsorbent, the amount of the catalyst loaded, etc.

In conducting exhaust gas purification during the cold start of engine by using the present system for exhaust gas purification, when, for a certain period during the cold start, secondary air is introduced upstream of the adsorbent in the flow direction of exhaust gas and/or between the adsorbent and the honeycomb heater or the ratio of the amount of air for combustion and the amount of fuel is changed so as to increase the oxygen amount in exhaust gas, the combustion reaction on catalyst is promoted and the early light-off of catalyst is achieved. The above introduction of secondary air or the above change of the ratio of the amount of air for combustion and the amount of fuel for increased oxygen supply is preferred because as the HC adsorbed on the adsorbent begins to be desorbed with the temperature rise of the adsorbent caused by the heat of exhaust gas, the HC concentration in exhaust gas increases and the oxygen required for purification (combustion) of HC becomes short.

The present system for exhaust gas purification functions satisfactorily by applying one system to one internal combustion engine. In a two-bank type engine, for example, each one system (total two systems) may be applied to each bank.

The present invention is described in more detail below by way of Examples. However, the present invention is not restricted to these Examples.

### [Production of catalysts]

Commercial γ-Al₂O₃ having a specific surface area of 200 m²/g was impregnated with Pd by the use of an aqueous Pd(NO₃)₂ solution. The resulting material was dried and then fired at 500°C to obtain a Pd-loaded Al₂O₃ powder. To the Pd-loaded Al₂O₃ powder were added appropriate amounts of water and acetic acid. Then, 30% by weight of a CeO₂ powder was added. The resulting mixture was subjected to wet pulverization to obtain a Pd-loaded Al₂O₃.CeO₂ slurry to be coated. The slurry was coated on a cordierite honeycomb carrier manufactured by NGK Insulators, Ltd. (partition wall thickness: 6 mil, cell density: 400 cells/in.²). The coated honeycomb carrier was fired at 500°C to obtain catalysts of different volumes each loaded with 150 g/ft³ of Pd.

### [Production of adsorbents]

Appropriate amounts of water and acetic acid were added to a commercial β-zeolite powder. Thereto was added 5% by weight (as oxide) of an Al₂O₃ sol. The resulting mixture was subjected to wet pulverization to obtain a slurry to be coated. The slurry was coated on a cordierite honeycomb carrier manufactured by NGK Insulators, Ltd. (partition wall thickness: 12 mil, cell density: 300 cells/in.²). The coated honeycomb carrier was fired at 500°C. On the resulting honeycomb carrier was coated the same Pd-loaded Al₂O₃.CeO₂ slurry as used in the above [Production of catalysts]. The resulting honeycomb carrier was fired at 500°C to obtain adsorbents of different volumes each loaded with 150 g/ft³ of Pd. Incidentally, in the adsorbents used in Examples 2 and 5, a blowing-through hole was formed in a honeycomb carrier not yet coated.

### [Production of honeycomb heater]

There were mixed a Fe powder, a Cr-30 Al powder (wt. %), a Fe-50Al powder (wt. %), a Fe-20B powder (wt. %), and an Y₂O₃ powder (all having an average particle diameter of 44 µm or less) so as to give a composition of Fe-16Cr-8Al-O.05B-0.5Y₂O₃ (wt. %). The resulting mixture was mixed with 4 g (per 100 g of the mixture) of methyl cellulose (as an organic binder) and 1 g (on the same basis) of oleic acid (as an oxidation inhibitor). The resulting readily formable bullet was subjected to extrusion molding to obtain a columnar honeycomb material. The honeycomb material was dried at 90°C for 16 hours in air and then kept at 1,325°C for 2 hours in a hydrogen atmosphere for sintering. The sintered material was heat-treated at 1,150°C for 30 minutes in air to obtain a honeycomb carrier containing hexagonal cells and having a cell density of 450 cells/in.², an outer diameter of 93 mm, a thickness of 44 mm and a partition wall thickness of 0.1 mm (about 4 mil).

The honeycomb carrier had a porosity of 2% (nearly non-porous) and had, on the surface, an Al₂O₃-based protective layer. Slits were formed in the honeycomb carrier to enable quick heating of the central portion, whereby a honeycomb heater as shown in Fig. 1 was obtained.

Next, on the honeycomb heater was coated the same Pd-loaded Al₂O₃.CeO₂ slurry as used in the above [Production of catalysts], followed by firing at 500°C, to form a catalyst layer so that the amount of Pd loaded became 150 g/ft³. The resulting material was provided with electrodes 11 and placed in a SUS-made casing with a distance for insulation being taken between the casing and the material, to complete a honeycomb heater loaded with a catalyst component. This honeycomb heater had an effective volume of 0.3 liter.

### [Constitution of exhaust gas purification systems]

Each of the catalysts, adsorbents and honeycomb heater obtained above was set in the exhaust pipe of an actual engine so that the exhaust gas temperature at the inlet of each catalyst, adsorbent or honeycomb heater became 850°C. Then, the engine was operated for 60 seconds at an A/F ratio close to the stoichiometric ratio (14.4). Thereafter, fuel feeding was cut for 5 seconds to shift the A/F ratio to a lean fuel side. In this engine operational mode including the above fuel-cutting, each catalyst, adsorbent or honeycomb heater was subjected to aging for total 100 hours. Using the catalysts, adsorbents and honeycomb heater which had been subjected to aging, the following systems for exhaust gas purification were constituted.

### (Example 1: System A)

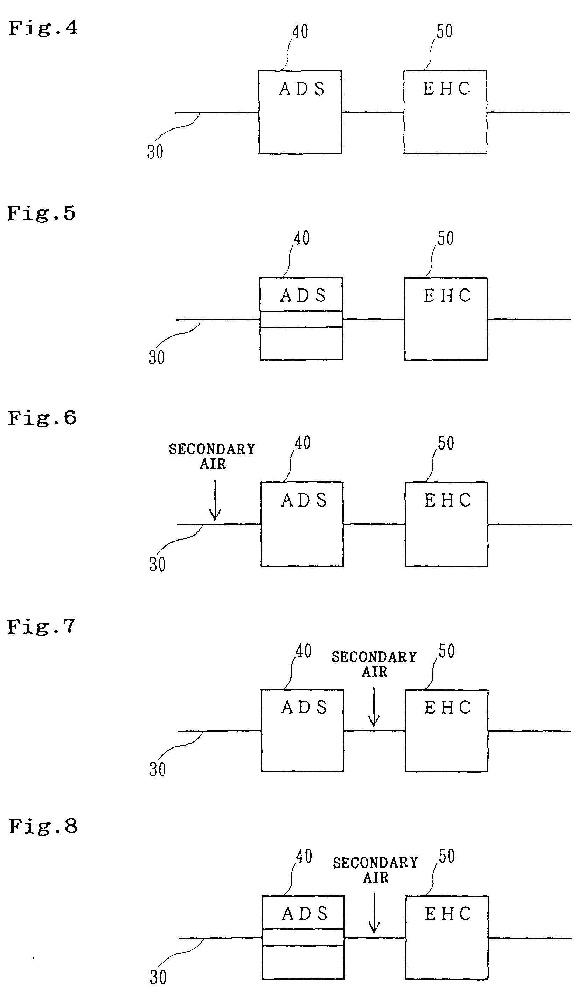

As shown in Fig. 4, adsorbent 40 (having a volume of 1.2 liters) and honeycomb heater 50 (having a volume of 0.3 liter) were disposed in exhaust gas line 30 with adsorbent 40 provided upstream in exhaust gas line 30. Electrification of honeycomb heater 50 was made for a period from 50 to 100 seconds from the start of engine.

### (Example 2: System B)

As shown in Fig. 5, adsorbent 40 (having a volume of 1.2 liters) and honeycomb heater 50 (having a volume of 0.3 liter) were disposed in exhaust gas line 30 with adsorbent 40 provided upstream in exhaust gas line 30. Incidentally, in adsorbent 40 was made a blowing-through hole having a diameter of 25 mm, in such a way that the section of adsorbent 40 and the section of the blowing-through hole formed concentric circles. Electrification of honeycomb heater 50 was made for a period from 50 to 100 seconds from the start of engine.

### (Example 3: System C)

As shown in Fig. 6, adsorbent 40 (having a volume of 1.2 liters) and honeycomb heater 50 (having a volume of 0.3 liter) were disposed in exhaust gas line 30 with adsorbent 40 provided upstream in exhaust gas line 30. Electrification of honeycomb heater 50 was made for a period from 50 to 100 seconds from the start of engine.

Secondary air was introduced upstream of adsorbent 40 at a rate of 100 liters/min for a period from 0 to 100 seconds from the start of engine.

### (Example 4: System D)

As shown in Fig. 7, adsorbent 40 (having a volume of 1.2 liters) and honeycomb heater 50 (having a volume of 0.3 liter) were disposed in exhaust gas line 30 with adsorbent 40 provided upstream in exhaust gas line 30. Electrification of honeycomb heater 50 was made for a period from 50 to 100 seconds from the start of engine.

Secondary air was introduced between adsorbent 40 and honeycomb heater 50 at a rate of 100 liters/min for a period from 0 to 100 seconds from the start of engine.

### (Example 5: System E)

As shown in Fig. 8, adsorbent 40 (having a volume of 1.2 liters) and honeycomb heater 50 (having a volume of 0.3 liter) were disposed in exhaust gas line 30 with adsorbent 40 provided upstream in exhaust gas line 30. Incidentally, in adsorbent 40 was made a blowing-through hole having a diameter of 25 mm, in such a way that the section of adsorbent 40 and the section of the blowing-through hole formed concentric circles. Electrification of honeycomb heater 50 was made for a period from 50 to 100 seconds from the start of engine.

Secondary air was introduced between adsorbent 40 and honeycomb heater 50 at a rate of 100 liters/min for a period from 0 to 100 seconds from the start of engine.

### (Comparative Example 1: System F)

As shown in Fig. 9, adsorbent 40 (having a volume of 1.2 liters) and catalyst 60 (having a volume of 0.3 liter) were disposed in exhaust gas line 30 with adsorbent 40 provided upstream in exhaust gas line 30.

### (Comparative Example 2: System G)

As shown in Fig. 10, honeycomb heater 50 (having a volume of 0.3 liter) and catalyst 60 (having a volume of 1.2 liters) were disposed in exhaust gas line 30 with honeycomb heater 50 provided upstream in exhaust gas line 30. Electrification of honeycomb heater 50 was made for a period from 0 to 30 seconds from the start of engine.

### (Comparative Example 3: System H)

As shown in Fig. 11, adsorbent 40 (having a volume of 0.2 liter) and honeycomb heater 50 (having a volume of 0.3 liter) were disposed in exhaust gas line 30 with adsorbent 40 provided upstream in exhaust gas line 30. Electrification of honeycomb heater 50 was made for a period from 30 to 80 seconds from the start of engine.

### (Comparative Example 4: System I)

As shown in Fig. 12, adsorbent 40 (having a volume of 0.4 liter) and honeycomb heater 50 (having a volume of 0.3 liter) were disposed in exhaust gas line 30 with adsorbent 40 provided upstream in exhaust gas line 30. Electrification of honeycomb heater 50 was made for a period from 30 to 80 seconds from the start of engine.

### (Comparative Example 5: System J)

As shown in Fig. 13, adsorbent 40 (having a volume of 0.2 liter), honeycomb heater 50 (having a volume of 0.3 liter) and catalyst 60 (having a volume of 0.2 liter) were disposed in exhaust gas line 30 with adsorbent 40 provided most upstream in exhaust gas line 30. Electrification of honeycomb heater 50 was made for a period from 30 to 80 seconds from the start of engine.

### [Evaluation of exhaust gas purification systems]

Each of the exhaust gas purification systems constituted in Examples 1 to 5 and Comparative Examples 1 to 5 was set in the exhaust gas line of a test vehicle having a V6 engine of 3,800 cc displacement, and a FTP (LA-4 mode) was conducted. Introduction of secondary air was made using an air pump; electrification of honeycomb heater was made using a 12 kV battery; collection of exhaust gas was made by a CVS method and emission values were calculated. The results (HC emissions in Bag 1 and Bag 2) are shown in Table 1.

Incidentally, Bag 1 indicates property at cold start and Bag 2 indicates property at steady-state operation after warm-up.

**Table 1**

| | System | HC emissions (g/mile) | |
|---|---|---|---|
| | | Bag 1 | Bag 2 |
| Example 1 | A | 0.254 | 0.010 |
| Example 2 | B | 0.238 | 0.015 |
| Example 3 | C | 0.233 | 0.012 |
| Example 4 | D | 0.227 | 0.011 |
| Example 5 | E | 0.212 | 0.015 |
| Comparative Example 1 | F | 0.320 | 0.009 |
| Comparative Example 2 | G | 0.329 | 0.011 |
| Comparative Example 3 | H | 0.315 | 0.025 |
| Comparative Example 4 | I | 0.286 | 0.018 |
| Comparative Example 5 | J | 0.298 | 0.020 |

As is clear from the results shown in Table 1, HC emissions in Bag 1 and Bag 2 could be reduced in Examples 1 to 5 according to the present invention, as compared with those in Comparative Examples 1 to 5.

Specifically explaining, in Comparative Example 1 using no honeycomb heater, purifiability during cold start is inferior; and also in Comparative Example 2 using no adsorbent, purifiability during cold start is inferior. In Comparative Examples 3 and 4 which have the same arrangement as in the present invention but wherein the total volume of the adsorbent and the honeycomb heater is small, the total catalyst volume is insufficient, no reduction in HC emission is achieved and, moreover, property at steady-state operation is inferior. Also in Comparative Example 5 which uses an adsorbent, a honeycomb heater and a catalyst but wherein the total volume is small, the total catalyst volume is insufficient, no reduction in HC emission is achieved and, moreover, property at steady-state operation is inferior.

As described above, according to the present invention, an adsorbent and a honeycomb heater are disposed in the exhaust gas line of an internal combustion engine with the adsorbent provided upstream in the flow direction of the exhaust gas and the volume of the adsorbent and the total volume of the adsorbent and the honeycomb heater are specified, whereby the total catalyst volume of the system is specified and, in addition, the volume of the adsorbent can be made a volume of minimum requirement or larger; as a result, unburnt HC can be adsorbed very effectively during the cold start of the engine and the HC, CO and NOx present in the exhaust gas can each be purified to a very low level.

As is apparent from the embodiments, the invention is especially applicable in an in-line type exhaust system, having all components in a single unbranched pipe.

## Claims

1. A system for exhaust gas purification disposed in the exhaust pipe of an internal combustion engine, which comprises:
an adsorbent formed by loading, on a first honeycomb carrier, an adsorbent layer containing an adsorbent component having a hydrocarbon adsorptivity, and
a honeycomb heater formed by fixing, to a second honeycomb carrier made of an electrically heatable material and having a large number of passages, electrodes for electrification of the carrier, the honeycomb heater being provided downstream of the adsorbent in the flow direction of the exhaust gas emitted from the engine,
in which system the adsorbent and the honeycomb heater each have a catalyst component loaded thereon, the total volume of the adsorbent and the honeycomb heater is 0.8 liter or larger, and the volume of the adsorbent is 0.4 liter or larger.

2. A system for exhaust gas purification according to Claim 1, wherein the adsorbent layer of the adsorbent is made mainly of a zeolite.

3. A system for exhaust gas purification according to Claim 2, wherein the zeolite has a Si/Al ratio of 40 or more.

4. A system for exhaust gas purification according to Claim 2, wherein the zeolite contains at least one kind of noble metal selected form Pt, Pd and Rh.

5. A system for exhaust gas purification according to Claim 2, wherein the zeolite contains at least one kind of ion selected from the ions of 1B group elements (Cu, Ag and Au) of periodic table.

6. A system for exhaust gas purification according to Claim 1, wherein the adsorbent has therein a blowing-through hole having a diameter larger than those of the passages (cells) of the first honeycomb carrier.

7. A system for exhaust gas purification according to Claim 1, wherein the volume of the adsorbent is 0.7 liter or larger.

8. A system for exhaust gas purification according to Claim 1, wherein the honeycomb heater has a resistance-adjusting means between the electrodes.

9. A system for exhaust gas purification according to Claim 8, wherein the resistance-adjusting means is slits.

10. A system for exhaust gas purification according to Claim 1, wherein the volume of the honeycomb heater is 0.1 liter or larger.

11. A system for exhaust gas purification according to Claim 1, wherein the total volume of the adsorbent and the honeycomb heater is 1.5 liters or larger.

12. A system for exhaust gas purification according to Claim 1, wherein secondary air is introduced upstream of the adsorbent in the flow direction of the exhaust gas and/or between the adsorbent and the honeycomb heater.
